(19) Europäisches Patentamt
European Patent Office
Office européen des brevets

(11) **EP 2 253 944 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
***G01G 7/04*** *(2006.01)*

(21) Anmeldenummer: **09160710.1**

(22) Anmeldetag: **20.05.2009**

(54) **Gesteuerte und/oder geregelte Kraftmessvorrichtung**

Controlled and/or regulated force measuring device

Dispositif de mesure de force commandée et/ou réglée

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**24.11.2010 Patentblatt 2010/47**

(73) Patentinhaber: **Mettler-Toledo GmbH**
**8606 Greifensee (CH)**

(72) Erfinder:
• **Baltisberger, Stephan**
**8625 Gossau (CH)**

• **Köppel, Thomas**
**8618 Oetwil am See (CH)**

(74) Vertreter: **Mettler-Toledo**
**IP Department**
**Im Langacher 44**
**8606 Greifensee (CH)**

(56) Entgegenhaltungen:
CH-A5- 678 455   DE-A1- 3 136 171
US-A- 4 134 468   US-A- 4 372 406

**Beschreibung**

Die vorliegende Erfindung betrifft eine, auf dem Prinzip der elektromagnetischen Kraftkompensation basierende Kraftmessvorrichtung, insbesondere eine Waage.

Bei diesem Messprinzip wird eine Gegenkraft, eine sogenannte Kompensationskraft erzeugt, welche der auf die Kraftmessvorrichtung einwirkenden Kraft entgegenwirkt. Durch diese Kompensation werden die beweglichen Teile der Kraftmessvorrichtung, welche zur Kraftaufnahme und zur Kraftweiterleitung dienen, in eine Ruhelage geregelt. In entsprechender Weise ergibt sich bei einer Waage die einwirkende Kraft durch die Gewichtskraft des Wägeguts und die beweglichen Teile umfassen Komponenten wie Waagschale, Hebel, Gestänge oder Wägezelle.

Oftmals wird die Kompensationskraft durch eine elektromagnetische Spule erzeugt, welche in einem Luftspalt eines Magnetsystems beweglich angeordnet ist und durch welche ein Strom geleitet wird. Dieser Strom, der sogenannte Kompensationsstrom, ist ein Mass für die erzeugte Kompensationskraft und damit ein Mass für die auf die Kraftmessvorrichtung einwirkende Kraft. Durch Messung dieses Kompensationsstroms wird dann ein entsprechendes Messsignal gewonnen, welches in einer Signalverarbeitungseinheit ausgewertet und dessen entsprechende Resultate einer Anzeige zugeführt werden.

Kraftmessvorrichtungen mit elektromagnetischer Kraftkompensation haben den Nachteil, dass die durch den Kompensationsstrom erzeugte Leistung in der Spule vom momentan fliessenden Kompensationsstrom und damit von der einwirkenden Kraft abhängt. Beim aufeinanderfolgenden Messen unterschiedlicher Kräfte oder Lasten werden also auch unterschiedliche Leistungen erzeugt und in Form von Wärme freigesetzt.

Als Folge der wechselnden Wärmefreisetzung und der daraus resultierenden Temperaturänderungen können Instabilitäten des Nullpunktes und der Empfindlichkeit auftreten. Daher sollten diese Einflussgrössen möglichst konstant gehalten werden, insbesondere bei Kraftmessvorrichtungen, an welche hohe Anforderungen bezüglich gleichbleibender Messgenauigkeit gestellt werden.

Aus dem Stand der Technik sind verschiedene Methoden zum Erreichen einer konstanten, lastunabhängigen Leistung in der Spule bekannt. So kann ein zusätzlicher Leistungsverbraucher verwendet werden, welcher zusätzlich elektrische Energie in Wärme umgewandelt. Dadurch bleibt die gesamte Leistung, bestehend aus der Summe der Leistung der Spule und der zusätzlich verbrauchten Leistung des Leistungsverbrauchers weitgehend konstant. Dabei sollte sich der zusätzliche Leistungsverbraucher möglichst neutral bezüglich einer Kraftwirkung verhalten, um eine Beeinflussung der erzeugten Kompensationskraft zu vermeiden.

Beispielsweise offenbart DE 28 19 451 verschiedene Kraft-neutrale Leistungsverbraucher in Form eines Leistungstransistors, eines Halbleiterwiderstands, oder einer bifilar gewickelten Spule, bei der die beiden Spulenteile gleichartig antiparallel angesteuert werden. Bei einer bifilar gewickelten und gleichartig antiparallel angesteuerten Spule werden zwei sich gegenseitig neutralisierende Kräfte erzeugt, sodass sich insgesamt ein Kraft-neutraler Leistungsverbraucher ergibt. Dieses Verfahren hat je nach Ausführungsform folgende Nachteile:

- Die unproduktive Leistung wird an einem anderen geometrischen Ort als die produktive Leistung erzeugt. Somit ist die Temperaturverteilung in der Kraftmessvorrichtung nach wie vor von der zu messenden Kompensationskraft abhängig.

- Die unproduktive Leistung wird in einem antiparallel geschalteten Spulenteil innerhalb der Kompensationsspule freigesetzt. Bei dieser Anordnung verringert sich der Wirkungsgrad der Kraftmessvorrichtung, da bei maximaler Kompensationskraft immer noch nur ein Teil der Spule zur Krafterzeugung verwendet werden kann.

Es ist ferner aus US 4 372 406 bekannt eine Spule für die Induktion einer magnetischen Kraft mit Strom abwechselnd in vorgegebenen Zeitintervallen in positiver und negativer Richtung zu versorgen. Die der Last entsprechende Kompensationskraft wird erzeugt indem im vorgegebenen Zeitintervall der Strom unterschiedliche lange in die negative als in die positive Richtung und umgekehrt fliesst. Der Messwert wird dabei durch die Subtraktion zweier Produkte aus Strom und dessen Zeitdauer ermittelt. Diese Puls-Weiten-Modulation (PWM) wird hier an einer monofilaren Spule betrieben um die Aufgabe zu lösen, die abgegebene Leistung zu kontrollieren.

Als weitere Methode zur Realisierung eines Kraft-neutralen Leistungsverbrauchers offenbart DE 31 36 171 das Hinzufügen eines Wechselstroms zum Kompensationsstrom. Dadurch bleibt die resultierende, gemittelte Kompensationskraft der Spule im Wesentlichen unverändert während sich durch den Wechselstromanteil ein zusätzlicher Leistungsverbrauch ergibt. Durch den Richtungswechsel werden Unterschiede in den beiden Wicklungen ausgemittelt. Nachteilig bei dieser Form der Wärmeerzeugung ist der relativ hohe Schaltungsaufwand, da man mit viel Aufwand dafür sorgen muss, dass der Wechselstromanteil den mittleren Kompensationsstrom nicht verändert.

Dieser Nachteil kann durch eine Spule mit zwei getrennt und gegensätzlich wirkenden Wicklungen, welche alternierend angesteuert werden, umgangen werden. Dabei erzeugt ein Strom durch die erste Wicklung eine erste Kraft und ein Strom durch die zweite Wicklung eine zweite Kraft. Gemittelt erzeugen dann die beiden Kräfte eine resultierende Kraft, welche die effektiv wirkende Kompensationskraft bildet.

Zur Steuerung der beiden Ströme offenbart CH 634 654 eine Umschaltvorrichtung, mit der der Kompensationsstrom während eines ersten Zeitintervalls durch die erste und während eines darauf folgenden zweiten Zeitintervalls durch die zweite Wicklung geleitet wird. Dadurch bleibt der gesamte Kompensationsstrom über die beiden Zeitintervalle weitgehend konstant. Allerdings erzeugt das periodische Umschalten der Stromdurchflüsse starke, sich ändernde Kräfte in der Spule und dadurch eine starke Geräuschentwicklung.

Im Bestreben, die nachteiligen Auswirkungen dieser periodisch abrupten Stromänderungen mit Filterelementen oder Glättungskondensatoren auszugleichen, wird die Leistung in der Spule wieder in starkem Mass von der momentan erzeugten Kompensationskraft und damit von der momentan einwirkenden Last abhängen.

Der vorliegenden Erfindung liegt daher die Aufgabe zugrunde, eine auf dem Prinzip der elektromagnetischen Kraftkompensation basierende Kraftmessvorrichtung anzugeben, mit welcher ein einfacher, kostengünstiger Aufbau und Betrieb der Kraftmessvorrichtung erreicht werden kann, bei gleichzeitiger Erfüllung von hohen Anforderungen an die Messgenauigkeit und an den Wirkungsgrad der Kraftmessvorrichtung.

Als weitere Aufgabe soll eine Kraftmessvorrichtung angegeben werden, welche die genannten Anforderungen erfüllt und welche ohne störende Geräuschentwicklung betrieben werden kann.

Ausserdem soll die Ausnutzung des für die Wicklungen zur Verfügung stehenden Raumes optimiert werden. Dieser Raum ergibt sich durch jenen Raum, welcher dem Spulensystem zur Unterbringung der Wicklungen zur Verfügung steht. Dieser Raum ist im Wesentlichen durch die Dimensionen des Permanentmagneten, insbesondere dessen Spaltes, gegeben, in welchem das Spulensystem angeordnet ist.

Diese Aufgaben werden mit einer Kraftmessvorrichtung und einem Verfahren gelöst, welche die in den unabhängigen Ansprüchen angegebenen Merkmale aufweisen. Vorteilhafte Ausgestaltungen der Erfindung sind in den weiteren, abhängigen Ansprüchen angegeben.

Die Erfindung betrifft eine Kraftmessvorrichtung, insbesondere eine Waage, welche auf dem Prinzip der elektromagnetischen Kraftkompensation basiert, mit einer in einem Magnetsystem beweglich angeordneten elektrischen Spule, welche mindestens zwei Wicklungen aufweist, mit einer Bestromungsvorrichtung, die mindestens zwei Teilstromquellen aufweist, wobei jeder Wicklung eine Teilstromquelle zugeordnet ist, mit einer Steuervorrichtung und/oder Regelvorrichtung, die die Bestromung der Wicklungen vermittels der Teilstromquellen derart steuert und/oder regelt, dass durch die Wicklungen jeweils ein Strom in Abhängigkeit der auf die Kraftmessvorrichtung einwirkenden Kraft derart geleitet wird, dass die mindestens zwei erzeugten elektromagnetischen Kräfte in ihrer Summe die Kompensationskraft bilden, und dass gleichzeitig die von der Spule abgegebene Leistung stets einen vorgegeben Wert einnimmt. Durch diese individuelle und gleichzeitige Bestromung der Wicklungen kann die Wärmeleistung in der Spule auf einfache und effiziente Weise ohne periodischen Richtungswechsel des Stromflusses erzeugt werden. Ausserdem entfällt bei einer im Wesentlichen gleichstromförmigen Bestromung das Problem der Geräuschentwicklung.

Der vorgegebene Wert der Leistung sollte grösser sein als die momentan zur Erzeugung der Kompensationskraft benötigte Leistung da anderenfalls die benötigte Kompensationskraft nicht erzeugt werden kann. Abgesehen von dieser Einschränkung kann der vorgegebene Wert der Leistung prinzipiell beliebig gewählt werden. Zum Beispiel kann dieser Wert in Abhängigkeit von der einwirkenden Last vorgegeben werden, um eine optimale Temperaturverteilung zu erreichen. Der vorgegebene Wert der Leistung kann aber auch, wie in den Ausführungsbeispielen beschrieben, gemäss speziellen Vorgaben definiert werden.

Ferner betrifft die Erfindung eine geeignete Vorrichtung zur Steuerung einer Kraftmessvorrichtung, insbesondere eine Waage, welche auf dem Prinzip der elektromagnetischen Kraftkompensation basiert, mit einer in einem Magnetsystem beweglich angeordneten elektrischen Spule, welche mindestens zwei Wicklungen aufweist, sowie dem folgenden Verfahren, um diese Wicklungsteile mit Strom zu versorgen: Durch jeden Wicklungsteil wird jeweils ein Strom in Abhängigkeit von der auf die Kraftmessvorrichtung einwirkenden Kraft derart geleitet, dass die erzeugten elektromagnetischen Kräfte in ihrer Wirkung nach aussen die Kompensationskraft bilden. Dabei werden die mindestens zwei Ströme durch die Wicklungen geleitet und deren Stromstärken in Abhängigkeit zur gesamten, in der Spule erzeugen Leistung so gesteuert und/oder geregelt, dass diese Leistung unabhängig von der resultierenden Kompensationskraft konstant bleibt.

Durch die Mehrteiligkeit der Spule ergibt sich für das Strommanagement ein zusätzlicher Freiheitsgrad, der die Möglichkeit bietet, unabhängig von der benötigten Kompensationskraft die Gesamtleistung in der Spule zu kontrollieren. Das heisst, es wird möglich, die Krafterzeugung und die Leistung in der Spule unabhängig voneinander zu steuern und/oder zu regeln, ohne dass sie sich gegenseitig beeinflussen.

Sehr vorteilhaft ist, dass insgesamt höhere Leistungen erreicht werden können. So kann der Messbereich bei gleicher Hebeluntersetzung wesentlich erhöht werden. Beispielsweise kann ein Messbereich von 0 Gramm bis 400 Gramm auf einen Messbereich von 0 Gramm bis 1 Kilogramm ausgeweitet werden. Alternativ oder zusätzlich kann auch eine geringere Hebeluntersetzung eingesetzt werden.

Besonders vorteilhaft ist die Erfindung dann, wenn die Drähte der einzelnen Spulenteile miteinander gewickelt worden sind (das heisst im Fall von zwei Drähten in Form einer bifilaren Wicklung). Dann wird die durch die Leistung in den Bauteilen der Kraftmessvorrichtung erzeugte Temperatur und deren lokale Verteilung optimal konstant gehalten, wodurch sich eine hohe Messgenauigkeit und Stabilität der Kraftmessvorrichtung ergibt.

In einer vorteilhaften Ausgestaltung der Erfindung ist der vorgegebene Wert konstant. Dabei kann der vorgegebene Wert entweder über den gesamten Lastbereich der Kraftmessvorrichtung oder auch nur in einem Teilbereich des Lastbereichs konstant sein. Beispielsweise ist denkbar den vorgegebenen Wert in einem Bereich von Nulllast bis 80% Last konstant vorzugeben und in dem Bereich von 80% bis 100% den Wert gemäss der momentan zur Erzeugung der Kompensationskraft benötigten Leistung vorzugeben. Durch diese, zumindest teilweise Lastunabhängigkeit wird eine hohe Stabilität der Messungen erreicht.

In einer weiteren vorteilhaften Ausgestaltung ist der vorgegebene Wert minimal bezüglich verschiedener Leistungswerte, welche sich für einen, insbesondere den gesamten, durch die Kraftmessvorrichtung erfassbaren Bereich der einwirkenden Kraft ergeben. Dadurch kann die Temperaturdifferenz zwischen der Spule und der Umgebungstemperatur auf einem möglichst niedrigen Wert gehalten werden, da eine Erzeugung von überschüssiger Wärme vermieden wird.

Vorzugsweise weist die erfindungsgemässe Kraftmessvorrichtung eine Strommessvorrichtung auf, welche den Kraftkompensationsstrom oder die Kraftkompensationsströme misst, sodass in Abhängigkeit von den ermittelten Messwerten die Ströme durch die Wicklungen gesteuert und/oder geregelt werden können.

In einer weiteren Ausgestaltung weist die Kraftmessvorrichtung einen Leistungsschätzer auf, welcher zur Bestimmung der momentan zur Erzeugung der Kompensationskraft benötigten Leistung der Spule dient. Des Weiteren wird bevorzugt die Leistung der Spule anhand der Summe der Teilströme, insbesondere anhand der Formel:

$$P0 = R * (I1 + I2)^2$$

mit R als dem Gesamtwiderstand der Spule und I1 und I2 als den Teilströmen der parallel geschalteten Wicklungen (W1, W2), berechnet und/oder abgeschätzt. Dabei ergibt sich der Gesamtwiderstand R der Spule aus der Parallelschaltung der beiden Wicklungen nach der Formel:

$$R = 1 / (1/R1 + 1/R2))$$

Aus der momentanen Leistung P0 wird dann der Vorgabewert Ptg für die Steuerung und/oder Regelung abgeleitet. Auf diese Weise kann die Steuerung auf einfache und effiziente Weise aufgebaut werden.

Besonders vorteilhaft ist es, wenn der Vorgabewert Ptg der Leistung der Spule bei maximaler Kompensationskraft entspricht.

Vorzugsweise weist die erfindungsgemässe Kraftmessvorrichtung eine geeignete Steuervorrichtung und/oder Regelvorrichtung auf, mit der die mindestens zwei Ströme als weitgehend kontinuierliche Ströme erzeugbar sind. Diese Steuervorrichtung und/oder Regelvorrichtung kann aus mehreren diskreten Schaltungselementen, aus integrierten Schaltungen aufgebaut oder als Programmteile in einem Mikroprozessor realisiert werden. Insbesondere kann durch einen hohen Integrationsgrad ein besonders kostengünstiger Aufbau der Steuervorrichtung und/oder Regelvorrichtung realisiert werden.

In einer weiteren Ausgestaltung weist die Kraftmessvorrichtung einen Steuergrössenerzeuger auf, um eine Steuergrösse zu berechnen, welche zur Steuerung und/oder Regelung der Teilstromquellen dient und welche als, insbesondere nichtlineare, Funktion von der momentan zur Erzeugung der Kompensationskraft benötigte Leistung P0 abhängt.

Vorzugsweise weist die Kraftmessvorrichtung einen Leistungsverteiler, insbesondere ein digitales Potentiometer, auf, welcher zur Steuerung und/oder Regelung der Teilstromquellen gemäss der Steuergrösse dient. Dadurch kann mit einfachen, standardisierten Bauteilen ein kostengünstiger Aufbau erreicht werden.

In einer weiteren bevorzugten Ausgestaltung ist der Steuergrössenerzeuger derart konfiguriert, dass die Steuergrösse x gemäss der Formel:

$$x = a - b \cdot \sqrt{P^*} + c \cdot \sqrt{P^* - 1},$$

berechnet wird, wobei a, b, und c vorgegebene Konstanten und P* die normierte Leistung der Spule ist, welche gemäss

$$P^* = Ptot / P0$$

bezüglich der Volllast-Leistung Ptot und der momentanen Leistung P0 der Spule berechnet wird. Dabei ist die momentane Leistung P0 jene Leistung, welche zur momentan erforderlichen Kompensationskrafterzeugung benötigt wird.

In einer weiteren bevorzugten Ausführung ist jeweils eine Teilstromquelle unmittelbar mit einer Wicklung verbunden, um dieser den Strom zuzuführen. Dadurch kann die Steuerung und/oder Regelung der Ströme in den Wicklungen auf direkte und damit auf besonders effiziente Weise durchgeführt werden.

Ferner ist auf vorteilhafte Weise die Teilstromquelle dazu eingerichtet, der mindestens einen Wicklung einen Gleichstrom gemäss einer vorgegebenen Offsetspannung zuzuführen.

In einer vorteilhaften Ausgestaltung der Erfindung wird die krafterzeugende Spule in mehrere, vorzugsweise zwei, separat parallel angesteuerte Teile mit vorzugsweise gleicher Windungszahl aufgeteilt. Das heisst, jeder Spulenteil ist in der Lage, einen Beitrag zur Kompensationskraft zu liefern, und wenn die Spulenteile parallel betrieben werden, bewirkt die Summe der Teilströme $I = \Sigma \, I_i$ den zur Krafterzeugung relevanten Kompensationsstrom. Mit dieser mehrteiligen, vorzugsweise zweiteiligen, krafterzeugenden Spule, werden deren Teile je separat mit einer Teilstromquelle, einem sogenannten Strombooster, angesteuert., Ausserdem ist eine Strommessvorrichtung vorgesehen, die den Kompensationsstrom misst, der benötigt wird, um die beweglichen Teile der Kraftmessvorrichtung auszubalancieren. Mit einem auf diesem Kompensationsstrom basierenden Leistungsschätzer, wird nun die zum Ausbalancieren der Kraftmessvorrichtung benötigte Kompensationskraft erfindungsmässig mit Hilfe eines Leistungsverteilers durch geeignetes Ansteuern der Spulenteile so erzeugt, dass die Leistung der Gesamtspule, unabhängig von der momentan benötigten Kompensationskraft, auf einem minimalen Wert konstant bleibt.

In einer vorteilhaften Ausgestaltung der Erfindung werden die mindestens zwei Stromstärken gemäss einer von der momentanen Leistung des Kompensationsstroms der Spule abhängigen Steuergrösse gleichzeitig gesteuert und/oder geregelt. Durch diese Vereinfachung kann die Komplexität der Steuerung verringert und damit eine besonders kostengünstige und stabile Schaltung aufgebaut werden.

In einer weiteren vorteilhaften Ausgestaltung der Erfindung beträgt die Gesamtleistung der Spule bei maximalem Kompensationsstrom:

$$P_{tot} = \Sigma \; R_i * I_i{}^2$$

mit $R_i$ als den Widerständen und $I_i$ als den Teilströmen der parallel geschalteten Wicklungsteile.

Da der Kompensationsstrom Icp das eigentliche Wägesignal w darstellt, muss er gemessen und gegebenenfalls umgewandelt und ausgewertet werden. Mit ihm kann die zur Erzeugung der momentan benötigten Kompensationskraft freizusetzende Leistung P0 der Spule auf einfache Weise ermittelt werden:

$$P0 = R * Icp^2$$

mit R als der Ohm'schen Ersatzimpedanz der gesamten Spule.

In einer besonders vorteilhaften Ausgestaltung der Erfindung werden die Stromstärken

$$I_1 = x * I + I_{offset1}$$

$$I_2 = (1-x) * I - I_{offset2}$$

bei einer Spule mit zwei Spulenteilen - mit I als dem momentanen Kompensationsstrom Icp - gemäss mindestens einer von der gesamten Leistung abhängigen nichtlinearen Funktion gesteuert.

Vorzugsweise wird die Funktion im Wesentlichen durch die folgende Formel bestimmt:

$$x = a - b \cdot \sqrt{P^*} + c \cdot \sqrt{P^* - 1} \, ,$$

wobei a, b, und c Konstanten sind und P* = Ptot / P0 das Verhältnis angibt zwischen der Volllast-Leistung Ptot der Spule bei maximalem Kompensationsstrom und der momentan zur Erzeugung der Kompensationskraft benötigten Leistung P0. Durch diesen Verlauf der Funktion wird eine optimale Lastunabhängigkeit der Spulen-Gesamtleistung erreicht. Denkbar sind auch andere geeignet zusammengesetzte Funktionsverläufe, die eine ähnliche Charakteristik aufweisen, beispielsweise Kompositionen von einfachen oder höhergradigen Polynomen oder von Exponentialfunktionen.

Vorzugsweise wird diese Berechnung durch eine in der Kraftmessvorrichtung angeordneten Steuervorrichtung und/oder Regelvorrichtung vorgenommen. Beispielsweise können diese Operationen auf analoge Weise mittels einfacher Schaltkreise oder auf digitale Weise mittels weniger Berechnungsschritte durch einen Mikroprozessor ausgeführt werden.

In einer besonders vorteilhaften Ausgestaltung der Erfindung wird den beiden Spulenströmen je ein Offsetstrom überlagert. Diese Ströme sorgen dafür, dass auch bei kleinem Kompensationsstrom eine konstante Leistung in der Spule erzeugt wird. In einer entsprechenden, bevorzugten Ausführung weist dazu die Steuervorrichtung und/oder Regelvorrichtung je Wicklung eine Teilstromquelle auf, welche jeweils mit einer Wicklung verbunden ist, um dieser einen Gleichstrom gemäss einer vorgegebenen Offsetspannung zuzuführen.

In dieser Ausgestaltung ist die Erfindung immer in der Lage, den beweglichen Teil der Kraftmessvorrichtung bei konstanter Spulen-Verlustleistung auszubalancieren, unabhängig davon, ob der Kompensationsstrom zwischen seinem minimalen und seinem maximalen Wert sein Vorzeichen ändert oder nicht.

In einem weiteren Ausführungsbeispiel der Erfindung weist die Steuervorrichtung und/oder Regelvorrichtung mindesten zwei Schaltelemente auf, um die Teilströme als im wesentlichen pulsförmigen Strom zu schalten, wobei beim zeitlichen Verlauf der Teilströme ein Zeitintervall vorgebbar ist, während dem die Teilströme gleichzeitig fliessen. Mit den Schaltelementen kann mit einfachen und kostengünstigen Mitteln eine zusätzliche Wärme erzeugt werden.

Dem zeitlichen Verlauf liegt ein periodischer Vorgang mit einer Periodendauer ts zugrunde. Dabei ist eine Periode durch das gleichzeitige periodische Umschalten der Schaltelemente definiert, welche das Umschalten der beiden Teilströme bewerkstelligt. Bei dieser gleichzeitigen Betätigung der Schaltelemente wird keine zusätzliche Wärme erzeugt, sodass dieser Betriebszustand dem Stand der Technik entspricht. Ferner ist in diesem Betriebszustand ein wirksames Zeitintervall t* definiert, während dem der erste Teilstrom durch den ersten Spulenwiderstand fließt. Aus dem wirksamen Zeitintervall t* und der Periodendauer ts kann das Wägesignal w gemäss dem folgenden Verhältnis bestimmt werden:

$$w = t^* / ts$$

Das Wägesignal w steht somit in direktem Zusammenhang mit der einwirkenden Kraft.

Erfindungsgemäss wird zur Erzeugung einer zusätzlichen Wärme das erste Steuersignal verzögert gegenüber dem Ende des wirksamen Zeitintervalls t* umgeschaltet. Dabei handelt es sich bei der Verzögerung um ein erstes Zeitintervall tp1, so dass zum Zeitpunkt t*+tp1 umgeschaltet wird. In entsprechender Weise wird das zweite Steuersignal nicht am Beginn oder am Ende der Periodendauer ts sondern ebenfalls verzögert um ein zweites Zeitintervall tp2, also zum Zeitpunkt ts+tp2 umgeschaltet. Diese Vorgänge wiederholen sich periodisch zu den Zeitpunkten: 0, ts, 2ts, 3ts, etc. Somit existieren innerhalb jeder Periodendauer ts ein erstes Zeitintervall tp1 und ein zweites Zeitintervall tp2, während denen die Steuersignale überlappen. Während diesen Zeitintervallen fliesst somit gleichzeitig der erste Teilstrom durch den ersten Spulenwiderstand und der zweite Teilstrom durch den zweiten Spulenwiderstand. Das hat zur Folge, dass erfindungsgemäss während dieser Zeitintervalle Wärme auf kraftneutrale Weise in den Spulen erzeugt wird.

Vorzugsweise wird das erste Zeitintervall tp1 und das zweite Zeitintervall tp2 identisch gewählt, so dass eine Symmetrie zwischen dem ersten Steuersignal SWI1 und dem zweiten Steuersignal SWI2 vorhanden ist. Diese Symmetrie wird erreicht, indem die beiden Verzögerungswerte tp1 und tp2 weitgehend identisch gewählt werden, nämlich als gemeinsamer Verzögerungswert tp.

Vorzugsweise wird der gemeinsame Verzögerungswert tp nach folgender Formel berechnet:

$$t_p = t_S \cdot \left( -\frac{1}{2} + \sqrt{\frac{1}{4} + w(1-w)} \right)$$

mit ts als Periodendauer und mit w als dem Gewichtssignal. Über den Wert w ist somit der Verzögerungswert tp abhängig von der einwirkenden Kraft (L).

In einer vorteilhaften Ausgestaltung weist die Steuervorrichtung und/oder Regelvorrichtung mindestens ein Verzögerungselement auf, welches mit mindestens einem Schaltelement verbunden ist, um das Schaltelement mittels eines Steuersignals zu steuern, wobei das Steuersignal von einem Verzögerungswert abhängt, welcher zum Zeitintervall korrespondiert. Dadurch können die Steuersignale auf einfache Weise erzeugt werden.

In einer weiteren vorteilhaften Ausgestaltung der Erfindung weist die Steuervorrichtung und/oder Regelvorrichtung eine Recheneinheit auf, mit welcher der Verzögerungswert in Abhängigkeit der einwirkenden Kraft berechenbar ist und wobei die Recheneinheit mit dem Verzögerungselement verbunden ist, um den berechneten Verzögerungswert an diese zu übertragen. Dadurch können komplexe Abhängigkeiten auf einfache Weise in die Regelung einbezogen werden.

In einer weiteren, bevorzugten Ausgestaltung der Erfindung weist die Kraftmessvorrichtung eine Messeinheit auf, welche mit der Recheneinheit verbunden ist, um ein von der einwirkenden Kraft abhängiges Messsignal an die Recheneinheit zu übertragen, so dass dort der lastabhängige Verzögerungswert bestimmt werden kann.

Die Erfindung lässt sich auch bei Verfahren mit Spulen einsetzen, welche mehr als zwei Wicklungen aufweisen. Beispielsweise können bei einer Spule mit drei Wicklungen zwei der Wicklungen eine Kraft in eine Richtung und die verbleibende Wicklung eine Kraft in die entgegengesetzte Richtung erzeugen. In ähnlicher Weise könnten die Kräfte bei Spulen mit vier Wicklungen kombiniert werden.

Einzelheiten des erfindungsgemässen Verfahrens und der erfindungsgemässen Vorrichtung ergeben sich anhand der Beschreibung der in den stark schematisierten Zeichnungen dargestellten Ausführungsbeispiele. Es zeigen:

Figur 1     eine Waage 1 in beispielhafter Ausgestaltung mit einer symbolisch dargestellter Last L, Waagschale 2 und Anzeigeeinheit 3;

Figur 2     eine Prinzipzeichnung einer, auf dem Prinzip der elektromagnetischen Kraftkompensation basierenden Kraftmesszelle 10, im Schnitt, mit einer beweglich angeordneten Spule 53 im Luftspalt 51 eines Magnetsystems 50;

Figur 3     ein beispielhaftes Blockschema der erfindungsgemässen Steuervorrichtung und/oder Regelvorrichtung CU, einer Strommessvorrichtung M, einer Signalverarbeitung A/D und DSP, einem schematisch dargestellten Magnetsystem 50 und einem Spulensystem 53 gemäss Figur 2, welche zwei Wicklungen W1 und W2 aufweist;

Figur 4     a) einen beispielhaften Verlauf der Funktion x(P0) der Steuergrösse x in Abhängigkeit der in der Spule erzeugten, momentan zur Kompensationskrafterzeugung benötigten Leistung P0, b) die zugehörigen Spulenspannung $U_{a1}$ und $U_{A2}$, c) die zugehörigen Ströme 11 und 12 d) die zugehörige gesamte Leistung Ptot in dem Spulensystem;

Figur 5     einen vereinfachten, beispielhaften Ausschnitt des Blockschemas gemäss Figur 3 mit einem Leistungsverteiler PD in Form eines digitalen Potentiometers und zwei nachgeschalteten Teilstromquellen PB1 und PB2;

Figur 6     ein stark vereinfachtes Blockschema eines weiteren Ausführungsbeispiels mit Schaltelementen S1 und S2, welche jeweils über Steuersignale SWI1 und SWI2 gesteuert werden, um die zugehörigen Spulen mit pulsförmigen Strömen zu betreiben;

Figur 7     einen stark vereinfachten zeitlichen Signalverlauf der Steuersignale SWI1 und SWI2 gemäss Figur 6;

Figur 8     ein Beispiel einer elektronischen Umsetzung des Blockschemas gemäss Figur 6, bei welcher die Schaltelemente S1 und S2 als Schalttransistoren ausgebildet sind, welche durch ein einzelnes gemeinsames Steuersignal SWI gesteuert werden;

Figur 9     einen stark vereinfachten zeitlichen Signalverlauf der Steuersignale SWI, SWI1 und SWI2 gemäss Figur 8.

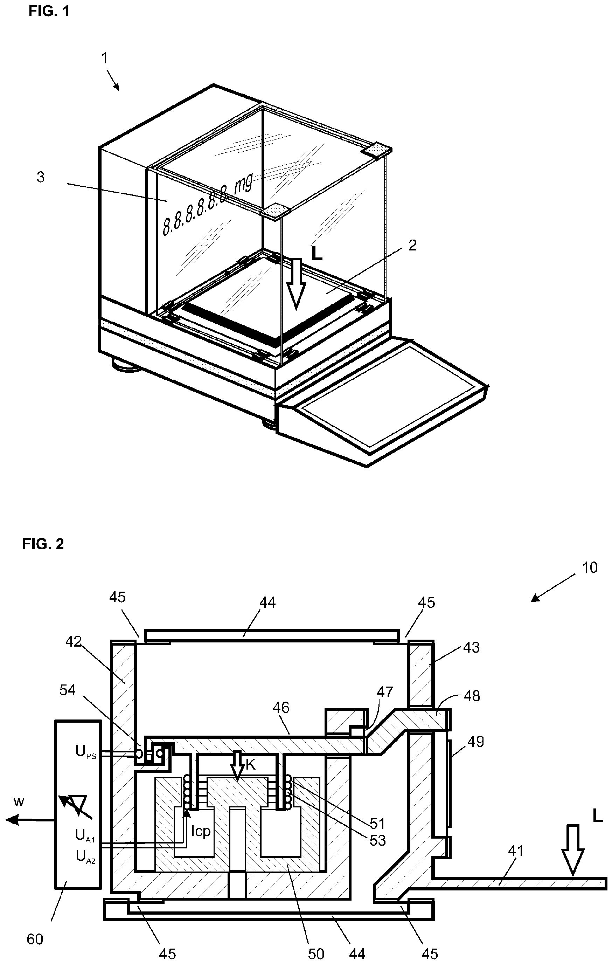

Figur 1 zeigt eine Kraftmessvorrichtung in beispielhafter Ausgestaltung in Form einer Waage 1 mit einer symbolisch dargestellten einwirkenden Kraft L. Bei einer Waage ist die einwirkende Kraft L typischerweise die Gewichtskraft oder die sogenannte Last des zu messenden Wägeguts, welche auf die Waagschale 2 wirkt. Aufgabe der Waage 1 ist es, einen genauen und stabilen Ausgabewert der einwirkenden Kraft L auf der Anzeigeeinheit 3, beispielsweise einer digitalen Flüssigkristallanzeige, zu erreichen.

In Figur 2 ist stark schematisiert eine für die Verwendung in der Wägetechnologie geeignete Kraftmesszelle 10 im Schnitt dargestellt, welche auf dem Prinzip der elektromagnetischen Kraftkompensation basiert. Die Kraftmesszelle 10 weist eine Vorrichtung zur Kraftübertragung mit einer Parallelführung mit einem feststehenden Bereich 42 und einem vertikal auslenkbaren Bereich 43, welche jeweils an den Enden eines Paars von Lenkern 44 über Biegelager 45 angelenkt sind, auf. Der vertikal auslenkbare Bereich 43 weist eine zur Aufnahme einer schematisch dargestellten, zu messenden Last L dienende Waagschale in Form eines Auslegers 41 auf. Die Normalkomponente der von einer Last L bewirkten Kraft wird vom vertikal auslenkbaren Bereich 43 durch ein Koppelelement 49 auf den kurzen Hebelarm 48 des Hebels 46 übertragen. Der Hebel 46 ist mittels eines Biegelagers 47 an einem Teil des feststehenden Bereichs 42 abgestützt. Die Kraftmesszelle weist ferner ein topfförmiges Magnetsystem 50 auf, das in fester Verbindung mit dem feststehenden Teil 42 angeordnet ist, und über einen Luftspalt 51 verfügt, auf. Im Luftspalt 51 ist eine mit dem längeren Hebelarm des Hebels 46 verbundene Spule 53 angeordnet. Die Spule 53 wird von einem Strom, dem sogenannten Kompensationsstrom Icp, durchflossen, dessen Grösse von der auf den Hebel 46 einwirkenden Kraft abhängt. Die Lage des Hebels 46 wird von einer Positionsmessvorrichtung 54 gemessen, die mit einer Steuervorrichtung und/oder Regelvorrichtung 60 verbunden ist. Die Steuervorrichtung und/oder Regelvorrichtung 60 steuert und/oder regelt den Kompensationsstrom Icp in Abhängigkeit der zugeführten Messsignale der Positionsmessvorrichtung 54 derart, dass der Hebel 46 stets in gleicher Lage gehalten oder nach einer Laständerung in diese wieder zurückgeführt wird.

Gemäss diesem Messprinzip erzeugt die elektromagnetische Spule auf den Hebel eine schematisch dargestellte Kraft, die sogenannte Kompensationskraft K, welche der einwirkenden Kraft L entgegen wirkt. Der Kompensationsstrom Icp zur Erzeugung der Kompensationskraft K ist ein Mass für die zu messende, einwirkende Kraft L. Durch Ermittlung der Grösse dieses Kompensationsstroms Icp wird, nach entsprechender Signalverarbeitung ein Wägesignal w erzeugt, das an die Anzeigeeinheit der Waage weitergeleitet und dort als entsprechender Messwert zur Anzeige gebracht wird. Das Wägesignal w kann aber auch an eine weitere Verarbeitungseinheit, beispielsweise einen Leitrechner, eine Anlagensteuerung oder an eine abgesetzte Kontrollvorrichtung weitergeleitet werden.

Die elektromagnetische Spule 53 besteht aus einer oder mehreren Wicklungen eines elektrisch leitenden und isolierten Wickeldrahts. In der vereinfachten Darstellung sind nur wenige Windungen des Wickeldraht schematisch dargestellt, typischerweise sind jedoch in der Spule 53 eine Vielzahl, beispielsweise einige hundert Windungen vorhanden.

Je nach unterschiedlich einwirkender Kraft L wird ein entsprechend unterschiedlicher Kompensationsstroms Icp durch die Spule 53 geleitet. Dadurch entsteht in der Spule 53 eine lastabhängige momentane Leistung P0, welche dementsprechend als Wärmequelle wirkt. Diese Wärmequelle führt zu einer entsprechenden Temperaturänderung der betroffenen Bauteile, insbesondere der Spule 53 und des Magnetsystems 50. Ziel der Erfindung ist es, mittels einer Last-unabhängigen Leistung die zusätzlich erzeugte Temperaturerhöhung und deren Verteilung in der Kraftmesseinrichtung auf einem möglichst konstanten und niedrigen Niveau zu halten.

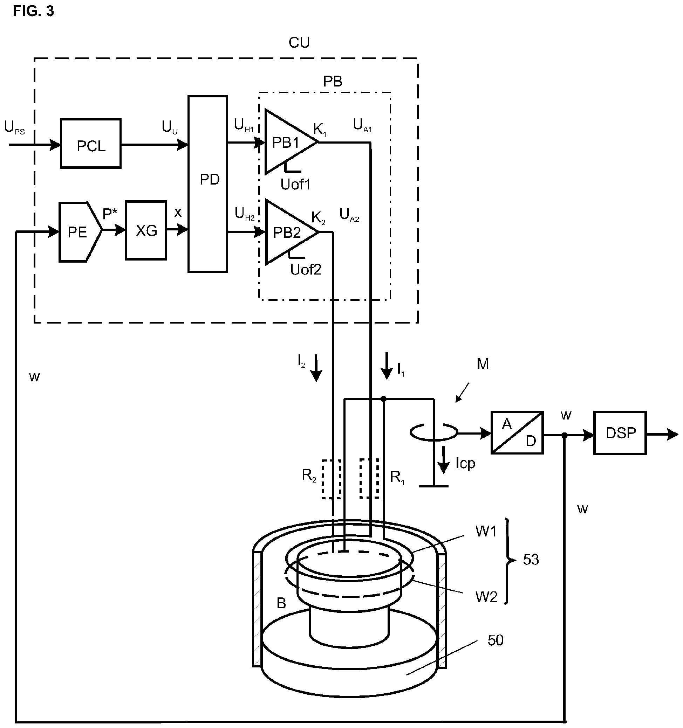

Figur 3 zeigt ein beispielhaftes Blockschema einer Steuervorrichtung und/oder Regelvorrichtung CU, einer Strommessvorrichtung M, einer Signalverarbeitungseinheit in Form eines Analog-Digital-Wandlers A/D und einer digitalen Signalverarbeitungseinheit DSP, einem schematisch dargestellten Magnetsystem 50 mit einer Spule 53 gemäss Figur 2, welche zwei Wicklungen W1 und W2 aufweist. Das topfförmige Magnetsystem 50 erzeugt in seinem Luftspalt ein Magnetfeld B, welches die erste Wicklung W1 und eine zweite Wicklung W2 umgibt. Zur Verdeutlichung ist das Magnetsystem 50 mit aufgeschnittenem Mantel dargestellt.

Die Wicklungen W1 und W2 der Spule 53 sind schematisch vereinfacht als eine einzelne Windung dargestellt, während die Wicklungen in der Realität typischerweise eine Vielzahl von Windungen aufweisen. Die erste Wicklung W1 ist mit einer durchgezogenen Linie und die zweite Wicklung W2 ist mit einer gestrichelten Linie dargestellt.

Das von der Positionsmessvorrichtung erzeugte Messsignal $U_{PS}$ wird einer Positionskontrollvorrichtung PCL zugeführt um dort ausgewertet und gegebenenfalls für die Weiterleitung aufbereitet zu werden. Der Ausgang der Positionskontrollvorrichtung PCL ist mit einem ersten Eingang eines Leistungsverteilers PD verbunden, sodass das Positionsregler-Ausgangssignal $U_U$ der Positionskontrollvorrichtung PCL als erste Eingabegrösse dem Leistungsverteiler PD zur Verfügung steht. Dabei korrespondiert das Positionsregler-Ausgangssignal $U_U$ zum eingespeisten Messsignal $U_{PS}$ der Positionsmessvorrichtung, sodass dem Leistungsverteiler PD eine Eingabegrösse zur Verfügung steht, welche in Abhängigkeit zu der auf die Kraftmessvorrichtung einwirkenden Kraft L steht.

Der Leistungsverteiler PD ist ausgangsseitig mit zwei Teilstromquellen PB1 und PB2, sogenannten Stromboostern, verbunden, sodass die vom Leistungsverteiler PD erzeugten Steuerspannungen $U_{H1}$ und $U_{H2}$ unabhängig voneinander an die Teilstromquellen PB1 und PB2 weitergeleitet werden können.

Die erste Teilstromquelle PB1 erzeugt unter Anwendung eines ersten Verstärkungsfaktors K1 eine erste Spulenspannung $U_{A1}$, welche am Ausgang der ersten Teilstromquelle PB1 zur Verfügung steht. Der Ausgang der ersten Teilstromquelle PB1 ist mit einem ersten Anschluss der ersten Wicklung W1 verbunden und der zweite Anschluss der ersten Wicklung W1 ist mit einem Erdpotential verbunden. Der Leitungswiderstand der ersten Wicklung W1, der so genannte erste Spulenwiderstand R1, ist in Form eines Ersatzschaltbildes durch einen Widerstand (gepunktete Linie) dargestellt. Liegt nun am ersten Anschluss der Wicklung W1 die erste Spulenspannung $U_{A1}$ an, so fliesst entsprechend dem ersten Spulenwiderstand R1 ein von der Teilstromquelle PB1 erzeugter erster Strom I1 durch die erste Wicklung W1 zum Erdpotential.

In gleicher Weise wie die erste Teilstromquelle PB1 und unabhängig davon ist die zweite Teilstromquelle PB2 mit der zweiten Wicklung W2 der Spule verbunden. Ebenfalls wird unter Anwendung eines zweiten Verstärkungsfaktors K2 durch die zweite Teilstromquelle PB2 eine zweite Spulenspannung $U_{A2}$ erzeugt, so dass entsprechend dem zweiten Spulenwiderstand R2 ein zweiter Strom I2 durch die zweite Wicklung W2 zum Erdpotential fliesst.

Die erste Teilstromquelle PB1 und die zweite Teilstromquelle PB2 können, wie angedeutet durch eine strich-punktierte Linie, zu einer Bestromungsvorrichtung PB zusammengefasst werden.

Die Verbindung der ersten Wicklung W1 mit dem Erdpotential und die Verbindung der zweiten Wicklung W2 mit dem Erdpotential werden zu einer gemeinsamen Leitung zusammengelegt, so dass in diesem Bereich die Spulenströme I1 und I2 zusammen fliessen und der Summenstrom der Spulenströme I1 und I2 den Kompensationsstrom Icp bildet, welcher dann zum Erdpotential fliesst.

Die Grösse des Summenstroms beziehungsweise des Kompensationsstroms Icp ist ein Mass für die in der Spule erzeugte Kompensationskraft K und damit ein Mass für die auf die Kraftmessvorrichtung einwirkende Kraft L. Dementsprechend wird der Kompensationsstroms Icp mit einer Strommessvorrichtung M gemessen und das dazu korrespondierende Messsignal in Form eines Wägesignal w erzeugt, welches mittels eines Analog-Digital-Wandlers A/D in digitale Form gewandelt wird. In einer nachgeschalteten digitalen Signalverarbeitungseinheit DSP wird das Wägesignal w aufbereitet. Die digitale Signalverarbeitungseinheit DSP kann beispielsweise einen Verstärker, einen Tiefpass-Filter oder einen Normierer aufweisen. Am Ausgang der digitalen Signalverarbeitungseinheit DSP steht dann das aufbereitete Wägesignal zur weiteren Nutzung, beispielsweise zur Anzeige oder zur Weiterleitung an einen Leitrechner, zur Verfügung.

Der Ausgang des Analog-Digital-Wandlers A/D ist mit einem Leistungsschätzer PE verbunden, sodass ein dem Kompensationsstrom Icp entsprechendes digitales Wägesignal w am Eingang des Leistungsschätzers PE zur Verfügung steht. Der Leistungsschätzer PE schätzt die momentan zur Erzeugung der Kompensationskraft benötigte Leistung P0 in der Spule gemäss folgender Formel:

$$P0 = R * Icp^2$$

wobei R der Gesamtwiderstand der Spule 53 und Icp der Wert des Kompensationsstroms ist und dem Wägesignal w entspricht. Der Gesamtwiderstand R der Spule ergibt sich aus der Parallelschaltung der beiden Wicklungen W1 und W2 nach der Formel:

$$R = 1 / (1/R1 + 1/R2)),$$

mit R1 als erstem Spulenwiderstand und R2 als zweitem Spulenwiderstand. Im Fall gleich grosser Spulenwiderstände R1 und R2 ist R gleich dem halben ersten Spulenwiderstand: R = R1 / 2.

Ausserdem wird im Leistungsschätzer PE die momentane Leistung P0 in der Spule bezüglich einer Normierungskonstante Ptot gemäss der Beziehung:

$$P^* = Ptot / P0$$

normiert. Dabei ist P* die normierte Leistung der Spule und die Normierungskonstante Ptot die gesamte Leistung der Spule bei Volllast.

Im Fall einer Kraftmessvorrichtung, bei der Nulllast den Betriebszustand beschreibt, bei der keine Kraft auf die Kraftmessvorrichtung einwirkt, während Volllast den Betriebszustand bezeichnet, bei dem die einwirkende Kraft L einer festgelegten, maximal messbaren Kraft entspricht, berechnet sich die Volllast-Leistung Ptot gemäss der Formel:

$$Ptot = R * IU^2$$

wobei IU den Kompensationsstrom Icp bei Volllast bezeichnet.

Die normierte Leistung P* der Spule liegt folglich zwischen dem Wert unendlich bei Nulllast und dem Wert 1 bei Volllast.

Der Ausgang des Leistungsschätzers PE ist mit einem Eingang eines Steuergrössenerzeugers XG verbunden, so dass ein der normierten Leistung der Spule P* entsprechender Wert an den Steuergrössenerzeuger XG weitergeleitet werden kann.

Im betrachteten Fall berechnet der Steuergrössenerzeuger XG eine Steuergrösse x aus der Eingangsgrösse, nämlich der normierten Leistung der Spule P*, gemäss folgender Formel:

$$x = \frac{1}{2} - \frac{1}{2} \cdot \sqrt{P^*} + \frac{1}{2} \cdot \sqrt{P^* - 1}$$

Somit liegt der Wert der Steuergrösse x zwischen dem Wert 1/2 bei Nulllast und dem Wert 0 bei Volllast.

Der Ausgang des Steuergrössenerzeugers XG ist mit einem zweiten Eingang des Leistungsverteilers PD verbunden, um die berechnete Steuergrösse x an den Leistungsverteiler PD zu übertragen, sodass diesem die Steuergrösse x als zweite Eingabegrösse zur Verfügung steht.

Im Leistungsverteiler werden aus der Steuergrösse x und aus dem zuvor beschriebenen Positionsregler-Ausgangssignal $U_U$ die beiden oben beschriebenen Steuerspannungen $U_{H1}$ und $U_{H2}$ gemäss folgender Formel bestimmt:

$$U_{H1} = U_U * x + Uof1$$

$$U_{H2} = U_U * (1-x) + Uof2$$

Mit der Bestimmung der beiden Steuerspannungen $U_{H1}$ und $U_{H2}$ stehen somit jene Grössen zur Verfügung, mit denen die bereits beschriebenen Teilstromquellen PB1 und PB2 angesteuert werden. Folglich schliesst sich der Kreis zur oben beschriebenen Funktion des Leistungsverteilers PD.

Die Schaltung bildet demnach zwei Regelkreise, nämlich einen ersten Regelkreis zur Regelung der Kompensationskraft K und einen zweite Regelkreis zur Verteilung der Ströme in solcher Weise, dass die gesamte, in den Wicklungen W1, W2 erzeugte Leistung Ptot über einen Bereich von verschieden starker Kompensationskraft K im Wesentlichen konstant ist.

Die einzelnen Komponenten der Schaltung können in geeigneter Weise, beispielsweise als gestrichelt gezeichnete Steuervorrichtung und/oder Regelvorrichtung CU, zusammengefasst werden. Des Weiteren können die Komponenten der Schaltung, insbesondere der Leistungsschätzer PE und der Stellgrössenerzeuger XG, als funktionale Blöcke in einer integrierten Schaltung oder als Programmteile in einem Mikroprozessor realisiert sein. Die Steuervorrichtung und/oder Regelvorrichtung CU kann also auf analoge oder digitale Weise oder in beliebigen Mischformen aufgebaut werden.

In einer besonders vorteilhaften Ausgestaltung der Erfindung erzeugt die erste Teilstromquelle PB1 den ersten Strom I1 mit einer zusätzlichen, fest vorgegebenen ersten Offsetspannungen Uof1. In gleicher Weise erzeugt auch die zweite Teilstromquelle PB2 den zweiten Strom mit einer zusätzlichen, fest vorgegebenen zweiten Offsetspannungen Uof2. Somit fliessen durch die beiden entsprechenden Wicklungen W1 und W2 die folgenden Ströme I1 und I2:

$$I1 = K1 / R1 * ( x * U_U + Uof1)$$

$$I2 = K2 / R2 * ( (1-x) * U_U + Uof2)$$

wobei Uof1 und Uof2 die Offsetspannungen sind und die weiteren Berechnungsgrössen den in den vorhergehenden Ausführungen definierten Grössen entsprechen.

Vorzugsweise werden die Offsetspannungen Uof1 und Uof2 bezüglich des Summenstroms IU bei Volllast gemäss folgenden Formeln bestimmt:

$$Uof1 = R1 * IU / K1 / 2$$

$$Uof2 = - R2 * IU / K2 / 2,$$

wobei IU ein Spulenstrom ist, der bei einer Kraftmessvorrichtung gemäss dem Stand der Technik bei Volllast auftreten würde.

Durch diese zusätzlichen Offsetspannungen Uof1 und Uof2 werden also die Ströme 11 und 12 jeweils mit einem Gleichstrom überlagert.

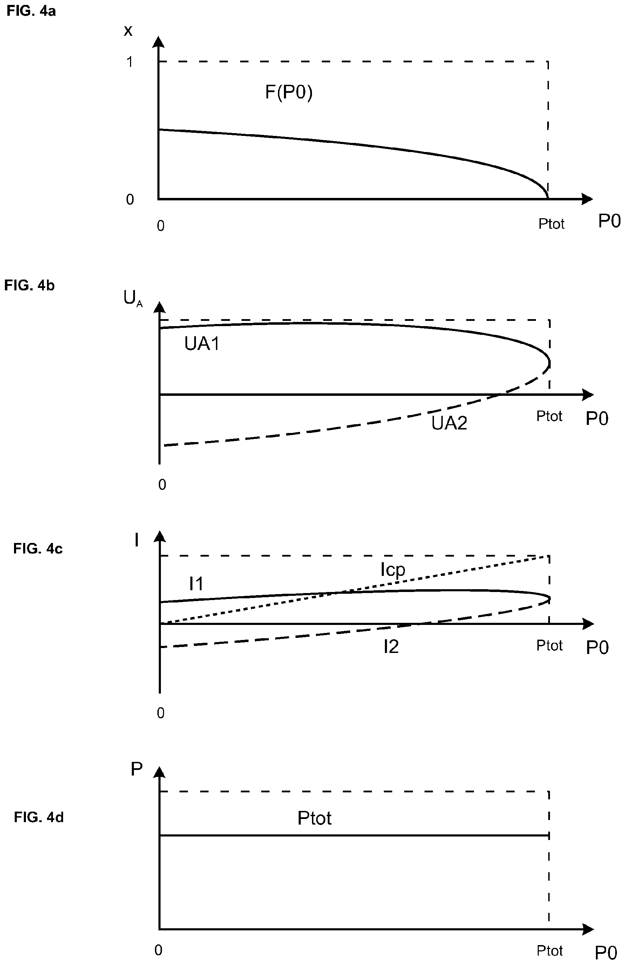

Figur 4a) zeigt einen beispielhaften Verlauf der Funktion F(P0) der Steuergrösse x in Abhängigkeit von der in der Spule zur momentanen Kompensationskrafterzeugung benötigten Leistung P0. Dabei ist die Steuergrösse x als y-Achse und die momentan zur Erzeugung der Kompensationskraft benötigte Leistung P0 als x-Achse dargestellt. Der Verlauf der Funktion F(P0) entspricht der vorgängig beschriebenen Formel:

$$x = \frac{1}{2} - \frac{1}{2} \cdot \sqrt{P^*} + \frac{1}{2} \cdot \sqrt{P^* - 1}$$

mit

$$P^* = Ptot / P0$$

wobei P* die normierte Leistung der Spule ist, mit der Volllast-Leistung Ptot als Normierungskonstante und P0 als die momentan benötigte Leistung.

Bei Nulllast, welche der Situation P0=0 entspricht, nimmt die Steuergrösse x den Maximalwert x=1/2 an. Bei Volllast (P0=Ptot) nimmt die Steuergrösse x den Minimalwert x=0 an. Der Verlauf der Funktion F(P0) ist nichtlinear.

Figur 4b) zeigt den Verlauf der beiden Spulenspannungen $U_{A1}$ und $U_{A2}$ entsprechend der Stellgrösse x gemäss Figur 4a), welche jeweils durch die Teilstromquelle PB1 beziehungsweise PB2 erzeugt werden. Dabei ist die Spulenspannung UA als y-Achse und die momentan zur Erzeugung der Kompensationskraft benötigte Leistung P0 als x-Achse dargestellt. Der Verlauf der ersten Spulenspannung $U_{A1}$ ist durch eine durchgezogene Linie und der Verlauf der zweiten Spulenspannung $U_{A2}$ durch eine gestrichelte Linie ersichtlich.

Figur 4c) zeigt den Verlauf der beiden Ströme I1 und I2, welche sich durch die an die erste Wicklung W1 und an die zweite Wicklung W2 angelegten Spannungen $U_{A1}$ und $U_{A2}$ gemäss Figur 4b) ergeben. Dabei ist der Strom I als y-Achse und die momentan zur Erzeugung der Kompensationskraft benötigte Leistung P0 als x-Achse dargestellt. Der Verlauf des ersten Stroms I1 ist als durchgezogene Linie und der Verlauf des zweiten Stroms I2 ist als gestrichelte Linie gezeichnet. Zusätzlich ist der Verlauf des Kompensationsstroms Icp, also die Summe der beiden Ströme I1 und I2, als gepunktete Linie dargestellt.

Schliesslich ist in Figur 4d) der Verlauf der in der Spule 53 erzeugten, gesamten Leistung Ptot mit dieser Leistung als y-Achse und der momentan zur Erzeugung der Kompensationskraft benötigten Leistung P0 als x-Achse dargestellt. Diese ist über den gesamten Bereich konstant und somit unabhängig von der einwirkenden Last.

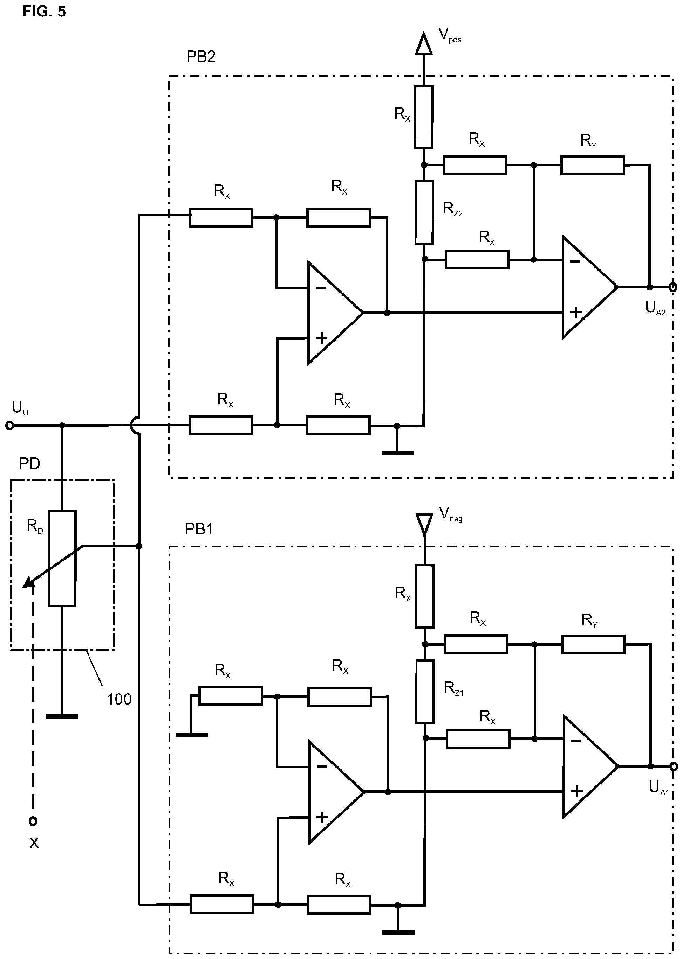

Figur 5 zeigt einen vereinfachten, beispielhaften Ausschnitt des Blockschemas gemäss Figur 3 mit einem Leistungsverteiler PD in Form eines digitalen Potentiometers und zwei nachgeschalteten Teilstromquellen PB1 und PB2.

Die beiden Teilstromquellen PB1 und PB2 sind jeweils gleichartig aufgebaut. Jede Teilstromquelle weist zwei auf bekannte Weise hintereinander geschaltete und rückgekoppelte Operationsverstärker auf. Die erste Teilstromquelle PB1 ist an eine negative Stromversorgung Vneg und die zweite Teilstromquelle PB2 an eine positive Stromversorgung Vpos angeschlossen. Durch die Wahl der Widerstände Rx, Ry und Rz1, Rz2 können die Verstärkungsfaktoren K1 und K2 und die Offsetspannungen Uof1 und Uof2 gemäss folgender Beziehung festgelegt werden:

$$K1 = Ry/Rx$$

$$K2 = Ry/Rx$$

$$Uof1 = -Rz1 / (Rz1 + Rx) * Vneg$$

$$Uof2 = -Rz2 / (Rz2 + Rx) * Vpos$$

Die beiden Spulenspannungen $U_{A1}$ und $U_{A2}$ stehen dann jeweils am Ausgang der Teilstromquelle PB1 beziehungsweise PB2 zur Weiterleitung an die zugehörige Wicklung W1 und W2 zur Verfügung.

Die beiden Teilstromquellen sind mit ihrem Eingang an den Ausgang des digitalen Potentiometers angeschlossen. Das digitale Potentiometer erzeugt, gemäss der Eigenschaft als Spannungsteiler, eine Ausgangsspannung welche zwischen dem Positionsregler-Ausgangssignal UU und dem Erdpotential liegt.

Im Leistungsverteiler werden aus der Steuergrösse x und aus dem zuvor beschriebenen Positionsregler-Ausgangssignal $U_U$ die beiden oben beschriebenen Steuerspannungen $U_{H1}$ und $U_{H2}$ gemäss folgender Formel bestimmt:

$$U_{H1} = U_U * x + Uof1$$

$$U_{H2} = U_U * (1-x) + Uof2$$

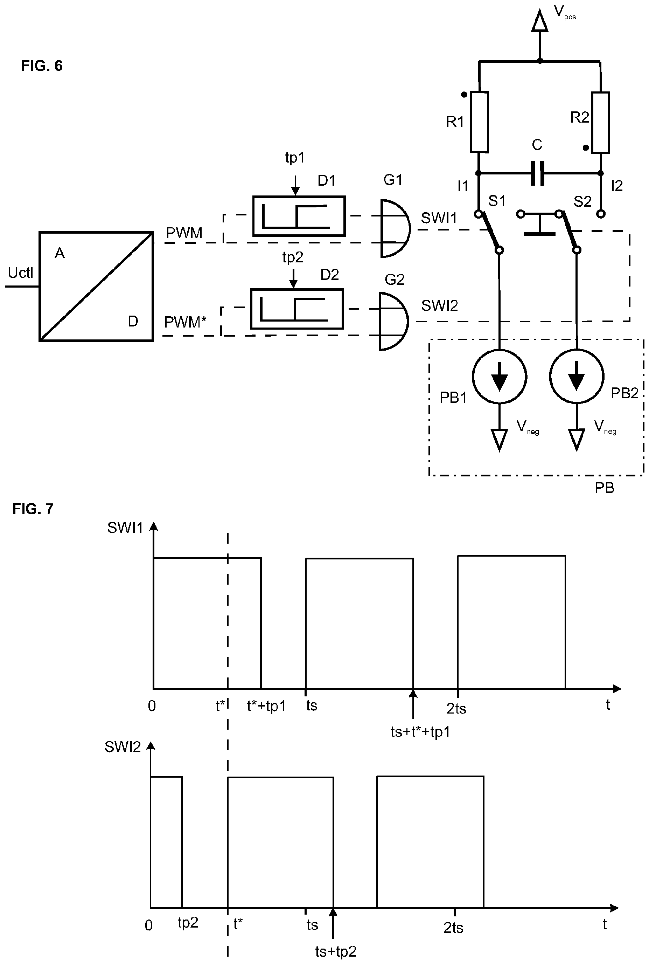

Figur 6 zeigt ein stark vereinfachtes Blockschema eines weiteren Ausführungsbeispiels mit Schaltelementen S1 und S2, welche jeweils über Steuersignale SWI1 und SWI2 gesteuert und/oder geregelt werden, um die zugehörigen Spulen mit pulsförmigen Strömen zu betreiben.

Die erste und die zweite Spule sind jeweils durch ihre entsprechenden Widerstände, nämlich den ersten Spulenwiderstand R1 und den zweiten Spulenwiderstand R2, dargestellt. Der erste Spulenwiderstand R1 ist einerseits mit einer positiven Versorgungsspannung Vpos und andererseits mit einem ersten Anschluss eines ersten Schaltelements S1 verbunden. Der zweite Anschluss des ersten Schaltelements S1 ist über eine erste Teilstromquelle PB1 mit einer negativen Versorgungsspannung Vneg verbunden. Das erste Schaltelement S1 ist als Umschalter ausgebildet, welcher drei Anschlüsse aufweist, wobei der dritte Anschluss mit dem gemeinsamen Schaltungspotential verbunden ist. Dadurch kann die Verbindung der ersten Teilstromquelle PB1 zwischen dem ersten Spulenwiderstand R1 und dem gemeinsamen Schaltungspotential umgeschaltet werden. In einer ersten Schalterstellung ist der erste Spulenwiderstand R1 mit der ersten Teilstromquelle PB1 verbunden, so dass ein erster Teilstrom I1 durch den ersten Spulenwiderstand R1 fließt.

In analoger Weise wie der erste Spulenwiderstand R1 ist auch der zweite Spulenwiderstand R2 beschaltet. Somit kann die Verbindung der zweiten Teilstromquelle PB2 zwischen dem zweiten Spulenwiderstand R2 und dem gemeinsamen Schaltungspotential umgeschaltet werden. In diesem Fall ist in der zweiten Schalterstellung der zweite Spulenwiderstand R2 mit der zweiten Teilstromquelle PB2 verbunden, so dass ein zweiter Teilstrom I2 durch den zweiten Spulenwiderstand R2 fließt.

Wie in den vorangehenden Beispielen, sind die beiden Spulen derart angeschlossen, dass sie bei gleicher Stromrichtung der Teilströme I1, I2 entgegen gesetzte Kraftwirkungen erzeugen (diese Polarität der Anschlusskonfiguration ist durch schwarze Punkte dargestellt). Des Weiteren sind die beiden Spulen an ihren, den Schaltelementen S1 und S2 zugewandten Anschlüssen über einen Kondensator C miteinander verbunden.

Die Schaltelemente S1 und S2 werden individuell angesteuert. Dazu wird eine Kontrollspannung Uctl einem Analog-Digital-Wandler A/D zugeführt. Der Analog-Digital-Wandler erzeugt ein erstes puls-weiten-moduliertes Signal PWM und ein zweites puls-weiten-moduliertes Signal PWM*.

Der erste Ausgang des Analog-Digital-Wandlers A/D ist einerseits mit dem ersten Eingang eines ersten Gatters G1 und andererseits mit dem ersten Eingang eines ersten Verzögerungselements D1 verbunden, so dass diesen jeweils das erste puls-weiten-modulierte Signal PWM zugeführt wird. Dem zweiten Eingang des ersten Verzögerungselementes D1 wird ein erster Verzögerungswert tp1 in Form eines Signals zugeführt, um damit die zeitliche Verzögerung des ersten Verzögerungselements D1 zu steuern. Der Ausgang des ersten Verzögerungselements D1 ist mit dem zweiten Eingang des ersten Gatters G1 verbunden. Am Ausgang des ersten Gatters G1 steht dann das erste Steuersignal SWI1 zur Verfügung, mit welchem das erste Schaltelement S1 gesteuert wird.

In analoger Weise wie der erste Ausgang ist der zweite Ausgang des Analog-Digital-Wandlers über ein zweites Verzögerungselement D2 und ein zweites Gatter G2 mit dem zweiten Schaltelement S2 verbunden, um aus dem zweiten puls-weitenmodulierten Signal PWM* ein, gemäß einem zweiten Verzögerungswert tp2 geändertes zweites Steuersignal SWI2 zu erzeugen, mit welchem das zweite Schaltelement S2 gesteuert wird.

Durch geeignete Wahl des ersten Verzögerungswerts tp1 und des zweiten Verzögerungswerts tp2 kann der zeitliche Verlauf des ersten Steuersignals SWI1 in Bezug auf den zeitlichen Verlauf des zweiten Steuersignals SWI2 verändert werden. Dieser zeitliche Signalverlauf der Steuersignale SWI1 und SWI2 wird stark vereinfacht in Figur 7 dargestellt.

Dem zeitlichen Verlauf liegt ein periodischer Vorgang mit einer Periodendauer ts zugrunde. Dabei ist eine Periode durch ein periodisches Umschalten der Schaltelemente S1 und S2 und damit durch das periodische Umschalten der beiden Teilströmen I1 und I2 definiert, wenn Schaltelemente S1 und S2 gleichzeitig betätigt werden. Bei gleichzeitiger Betätigung der Schaltelemente S1 und S2 wird keine zusätzliche Wärme erzeugt sodass dieser Betriebszustand dem Stand der Technik entspricht. Ferner ist in diesem Betriebszustand ein wirksames Zeitintervall t* definiert, während dem der erste Teilstrom I1 durch den ersten Spulenwiderstand R1 fließt. Aus dem wirksamen Zeitintervall t* und der Periodendauer ts kann das Wägesignal w gemäss dem folgenden Verhältnis bestimmt werden:

$$w = t^* / ts.$$

Das Wägesignal w steht somit in direktem Zusammenhang mit der einwirkenden Kraft.

Während dieses wirksamen Zeitintervalls t* ist der Fluss des zweite Teilstroms I2, abgesehen von einem Ausgleichsstrom über den Kondensator C, unterbrochen. Am Ende des wirksamen Zeitintervalls t* werden bei diesem Betriebszustand die beiden Schaltelemente S1 und S2 gleichzeitig betätigt, so dass während dem restlichen Zeitintervall ts-t* der zweite Teilstrom I2 durch den zweiten Spulenwiderstand R2 fließt. Schließlich werden am Ende der Periodendauer ts die beiden Schaltelemente S1 und S2 in ihre ursprüngliche Stellung zurück geschaltet und somit eine neue Periode eingeleitet.

Erfindungsgemäss wird zur Erzeugung einer zusätzlichen Wärme das erste Steuersignal SWI1 verzögert gegenüber dem Ende des wirksamen Zeitintervalls t* umgeschaltet. Dabei handelt es sich bei der Verzögerung um ein erstes Zeitintervall tp1, so dass zum Zeitpunkt t*+tp1 umgeschaltet wird. In entsprechender Weise wird das zweite Steuersignal SWI2 nicht am Beginn oder am Ende der Periodendauer ts sondern ebenfalls verzögert um ein zweites Zeitintervall tp2, also zum Zeitpunkt ts+tp2 umgeschaltet. Diese Vorgänge wiederholen sich periodisch zu den Zeitpunkten: 0, ts, 2ts, 3ts, etc. Somit existieren innerhalb jeder Periodendauer ts ein erstes Zeitintervall tp1 und ein zweites Zeitintervall tp2, während denen die Steuersignale SW1 und SW2 überlappen. Während diesen Zeitintervallen fliesst somit gleichzeitig der erste Teilstrom 11 durch den ersten Spulenwiderstand R1 und der zweite Teilstrom 12 durch den zweiten Spulenwiderstand R2. Das hat zur Folge, dass während dieser Zeitintervalle kraftneutrale Wärme in den Spulen erzeugt wird.

Vorzugsweise wird das erste Zeitintervall tp1 und das zweite Zeitintervall tp2 identisch gewählt, so dass sich eine Symmetrie zwischen dem ersten Steuersignal SWI1 und dem zweiten Steuersignal SWI2 vorhanden ist. Diese Symmetrie wird erreicht, indem die beiden Verzögerungswerte tp1 und tp2 weit gehend identisch gewählt werden, nämlich als gemeinsamer Verzögerungswert tp.

Vorzugsweise wird der gemeinsame Verzögerungswert tp mit nachfolgender Formel berechnet:

$$t_p = t_S \cdot \left( -\frac{1}{2} + \sqrt{\frac{1}{4} + w(1-w)} \right)$$

mit ts als Periodendauer und mit w als dem Wägesignal. Über den Wert w ist somit der Verzögerungswert tp abhängig von der einwirkenden Kraft (L).

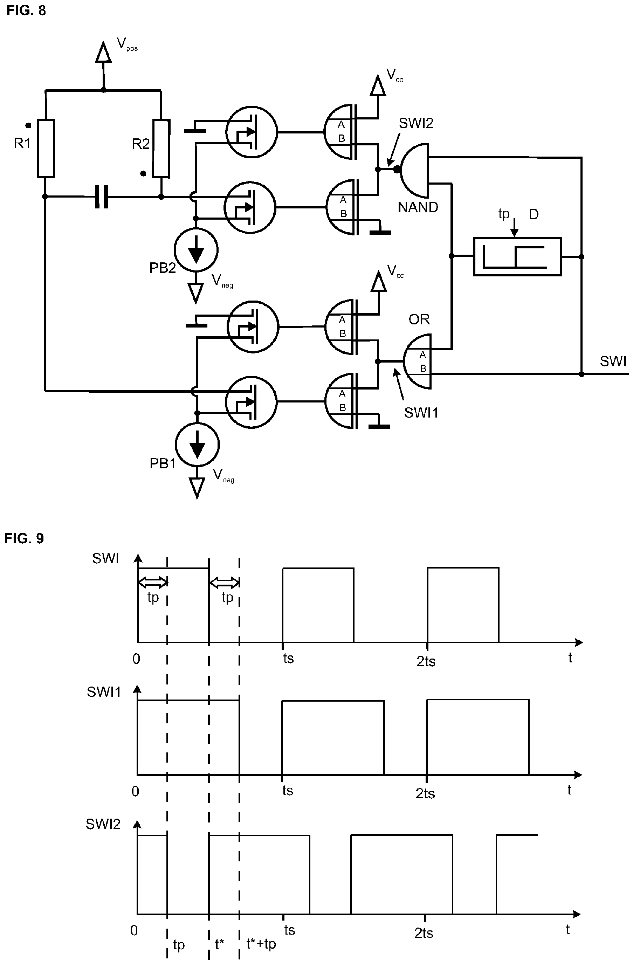

Figur 8 zeigt ein Beispiel einer elektronischen Umsetzung des Blockschemas gemäss Figur 6, bei welcher die Schaltelemente S1 und S2 als Schalttransistoren mit zugehörigen logischen Gattern ausgebildet sind. Dabei wird das erste Schaltelement S1 durch ein Paar Schalttransistoren in Gegentaktschaltung und mit einem zugehörigen Paar komplementärer geschalteter Gatter gebildet, so dass die Verbindung der ersten Teilstromquelle PB1 zwischen dem ersten Spulenwiderstand R1 und dem gemeinsamen Schaltungspotential gemäß dem ersten Steuersignal SWI1 umgeschaltet werden kann. In gleicher Weise wie das erste Schaltelement S1 ist auch das zweite Schaltelement S2 ausgebildet, so dass die Verbindung der zweiten Teilstromquelle PB2 zwischen dem zweiten Spulenwiderstand R2 und dem gemeinsamen Schaltungspotential gemäß dem zweiten Steuersignal SWI2 umgeschaltet werden kann.

Das erste Steuersignal SWI1 und das zweite Steuersignal SWI2 werden mittels eines Verzögerungselements D und zweier logischer Gatter OR und NAND aus einem gemeinsamen Steuersignal SWI erzeugt. Dabei entspricht das Steuersignal SWI dem Steuersignal beim gleichzeitigen Umschalten der beiden Teilströme I1 und I2. Erfindungsgemäss wird nun dieses Steuersignal SWI sowohl dem ersten Eingang des Gatters NAND als auch dem Eingang des Verzögerungselements D als auch dem zweiten Eingang des Gatters OR zugeführt. Der Ausgang des Verzögerungselements D ist sowohl mit dem zweiten Eingang des Gatters NAND als auch mit dem ersten Eingang des Gatters OR verbunden, so dass das um den Verzögerungswert tp verzögerte, gemeinsame Steuersignal SWI zur Steuerung der Gatter OR und NAND verwendet wird. Das Ausgangssignal des Gatters OR bildet das erste Steuersignal SWI1 während das Ausgangssignal des Gatters NAND das zweite Steuersignal SWI2 bildet. Die beiden Steuersignale SWI1 und SWI2 werden dann wie oben beschrieben zur Steuerung der Schaltelemente S1 und S2 beziehungsweise der komplementär geschalteten Gatter verwendet.

Figur 9 zeigt einen stark vereinfachten zeitlichen Signalverlauf der Steuersignale SWI, SWI1 und SWI2 gemäss Figur 8. Aus dem Steuersignal SWI wird mittels des Gatters OR das erste Steuersignal SWI1 und mittels des Gatters NAND das zweite Steuersignal SWI2 erzeugt. Dabei ist die absteigende Flanke des ersten Steuersignals SWI1 um das Zeitintervall tp gegenüber dem Steuersignal SWI verzögert. In analoger Weise ist auch die absteigende Flanke des zweiten Steuersignals SWI2 um das Zeitintervall tp gegenüber dem Steuersignal SWI verzögert. Somit ergibt sich eine ähnliche Situation wie in Figur 7, für den Fall, dass dort der erste Verzögerungswert tp1 und der zweite Verzögerungswert tp2 gleich gewählt werden und somit dem gemeinsamen Verzögerungswert tp entsprechen. Folglich kann der gemeinsame Verzögerungswert tp gemäß der zuvor beschriebenen Formel bestimmt werden.

**Bezugszeichenliste**

| | |
|---|---|
| 1 | Kraftmessvorrichtung |
| 2 | Waagschale |
| 3 | Anzeigeeinheit |
| 10 | Kraftmesszelle |
| 41 | Ausleger |
| 42 | feststehender Bereich |
| 43 | vertikal auslenkbarer Bereich |
| 44 | Lenker |
| 45, 47 | Biegelager |
| 46 | Hebel |
| 48 | Hebelarm |
| 49 | Koppelelement |
| 50 | Magnetsystem |
| 51 | Luftspalt |
| 53 | Spule |
| 54 | Positionsgeber |
| 60 | Steuervorrichtung und/oder Regelvorrichtung |

| L | einwirkende Kraft, Last |
| K1, K2 | Verstärkungsfaktoren |
| A/D | Analog-Digital-Wandler |
| B | Magnetfeld des Magnetsystems |
| C | Kondensator |
| CU | Steuervorrichtung und/oder Regelvorrichtung |
| D, D1, D2 | Verzögerungselement |
| DSP | digitale Signalverarbeitungseinheit |
| PD | Leistungsverteiler |
| G1, G2, G2, G4 | Gatter |
| NAND, OR | Gatter |
| I | Gesamtstrom |
| Icp | Kompensationsstrom |
| Iu | Spulenstrom bei Volllast |
| I1, I2 | Teilstrom, Strom |
| K | Kompensationskraft |
| M | Strommessvorrichtung |
| PCL | Positionsregler |
| P0 | momentan zur Erzeugung der Kompensationskraft benötigte Leistung |
| Ptot | gesamte Leistung der Spule bei Volllast, Volllast-Leistung |
| Ptg | vorgegebener Wert der Leistung |
| P* | normierte Leistung der Spule |
| R | Gesamtwiderstand der Spule |
| R1, R2 | Spulenwiderstand |
| Rx, Ry, Rz1, Rz2 | Widerstand |
| Uctl | Kontrollspannung |
| Uof1, Uof2 | Offsetspannungen |
| $U_{PS}$ | Messsignal |
| $U_U$ | Positionsregler-Ausgangssignal |
| $U_{H1}, U_{H2}$ | Steuerspannung |
| $U_{A1}, U_{A2}$ | Spulenspannung |
| PE | Leistungsschätzer |
| PB | Bestromungsvorrichtung |
| PB1, PB2 | Strombooster, Teilstromquelle |
| S1, S2 | Schaltelement |
| SWI, SWI1, SWI2 | Steuersignal |
| Vpos / Vneg | positive / negative Versorgungsspannung |
| w | Wägesignal |
| W1, W2 | Wicklung, Spulenteil |
| x | Steuergrösse |
| XG | Steuergrössenerzeuger |
| ts | Periodendauer |
| t* | wirksames Zeitintervall |
| tp, tp1, tp2 | Verzögerungswert |

**Patentansprüche**

1. Kraftmessvorrichtung (1), insbesondere Waage, welche auf dem Prinzip der elektromagnetischen Kraftkompensation basiert, mit einer in einem Magnetsystem (50) beweglich angeordneten elektrischen Spule (53), welche mindestens zwei Wicklungen (W1, W2) aufweist, mit einer Bestromungsvorrichtung (PB), die mindestens zwei Teilstromquellen (PB1, PB2) aufweist, wobei jeder Wicklung (W1, W2) eine Teilstromquelle (PB1, PB2) zugeordnet ist, mit einer Steuervorrichtung und/oder Regelvorrichtung (CU), die die Bestromung der Wicklungen vermittels der Teilstromquellen (PB1, PB2) derart steuert und/oder regelt, dass durch die Wicklungen (W1, W2) jeweils ein Strom (I1, I2) in Abhängigkeit der auf die Kraftmessvorrichtung einwirkenden Kraft (L) derart geleitet wird, dass die mindestens zwei erzeugten elektromagnetischen Kräfte in ihrer Summe die Kompensationskraft bilden, und dass gleichzeitig die von der Spule abgegebene Leistung stets einen vorgegeben Wert (Ptg) einnimmt.

2. Kraftmessvorrichtung nach Anspruch 1, **dadurch gekennzeichnet, dass** der vorgegebene Wert (Ptg) konstant ist.

3. Kraftmessvorrichtung nach Anspruch 1 oder 2, **dadurch gekennzeichnet, dass** der vorgegebene Wert (Ptg) minimal bezüglich verschiedener Leistungswerte ist, welche sich für einen, insbesondere den gesamten, durch die Kraftmessvorrichtung erfassbaren Bereich der einwirkenden Kraft (L) ergeben.

4. Kraftmessvorrichtung nach einem der Ansprüche 1 bis 3, **dadurch gekennzeichnet, dass** die Kraftmessvorrichtung eine Strommessvorrichtung (M) aufweist, welche den Kraftkompensationsstrom oder die Kraftkompensationsströme misst, sodass in Abhängigkeit von den ermittelten Messwerten die Ströme (I1, I2) durch die Wicklungen (W1, W2) gesteuert und/oder geregelt werden können.

5. Kraftmessvorrichtung nach einem der Ansprüche 1 bis 4, **dadurch gekennzeichnet, dass** die Kraftmessvorrichtung einen Leistungsschätzer (PE) aufweist, welcher zur Bestimmung der momentan zur Erzeugung der Kompensationskraft benötigte Leistung (P0) der Spule dient, anhand welcher die Steuerung und/oder Regelung der Leistung auf den vorgegebenen Wert (Ptg) erfolgt.

6. Kraftmessvorrichtung nach Anspruch 5, **dadurch gekennzeichnet, dass** der Leistungsschätzer (PE) konfiguriert ist, die momentane Leistung der Spule anhand der Summe der Ströme I1 und I2, insbesondere mittels der Formel

$$P0 = R * (I1 + I2)^2$$

mit R als dem Gesamtwiderstand der Spule und I1

und 12 als den Teilströmen der parallel geschalteten Wicklungen (W1, W2), zu berechnen.

7. Kraftmessvorrichtung nach einem der Ansprüche 1 bis 6, **dadurch gekennzeichnet, dass** die Kraftmessvorrichtung einen Steuergrössenerzeuger (XG) aufweist, um eine Steuergrösse (x) zu berechnen, welche zur Steuerung und/oder Regelung der Teilstromquellen (PB1, PB2) dient, und welche als, insbesondere nichtlineare, Funktion F(P0) von einer momentan zur Erzeugung der Kompensationskraft benötigten Leistung (P0) abhängt.

8. Kraftmessvorrichtung nach Anspruch 7, **dadurch gekennzeichnet, dass** die Kraftmessvorrichtung einen Leistungsverteiler (PD), insbesondere ein digitales Potentiometer, aufweist, welcher zur Steuerung und/oder Regelung der Teilstromquellen (PB1, PB2) gemäss der Steuergrösse (x) dient.

9. Kraftmessvorrichtung nach Anspruch 8, **dadurch gekennzeichnet, dass** der Steuergrössenerzeuger (XG) derart konfiguriert ist, dass die Steuergrösse (x) gemäss der Formel:

$$x = a - b \cdot \sqrt{P^*} + c \cdot \sqrt{P^* - 1}$$

berechnet wird, wobei a, b, und c vorgegebene Konstanten und P* die gemäss

$$P^* = P_{tot} / P_0$$

bezüglich der Volllast-Leistung Ptot normierte momentane Leistung P0 der Spule ist, welche benötigt wird, um die momentan erforderliche Kompensationskraft zu erzeugen.

10. Kraftmessvorrichtung nach einem der Ansprüche 1 bis 9, **dadurch gekennzeichnet, dass** jeweils eine Teilstromquelle (PB1, PB2) unmittelbar mit einer Wicklung (W1, W2) verbunden ist, um dieser den Strom (I1, I2) zuzuführen.

11. Kraftmessvorrichtung nach einem der Ansprüche 1 bis 10, **dadurch gekennzeichnet, dass** die Teilstromquelle (PB1, PB2) dazu eingerichtet ist, der mindestens einen Wicklung (W1, W2) einen Gleichstrom gemäss einer vorgegebenen Offsetspannung (Uof1, Uof2), zuzuführen.

12. Kraftmessvorrichtung nach einem der Ansprüche 1 bis 10, **dadurch gekennzeichnet, dass** die Steuervorrichtung und/oder Regelvorrichtung (CU) mindesten zwei Schaltelemente (S1 und S2) aufweist, um die Teilströme (I1 und I2) als im wesentlichen pulsförmigen Strom zu schalten, wobei beim zeitlichen Verlauf der Teilströme (I1 und I2) ein Zeitintervall vorgebbar ist, während dem die Teilströme (I1 und I2) gleichzeitig fliessen.

13. Kraftmessvorrichtung nach Anspruch 12, **dadurch gekennzeichnet, dass** die Steuervorrichtung und/oder Regelvorrichtung (CU) mindestens ein Verzögerungselement (D, D1, D2) aufweist, welches mit mindestens einem Schaltelement (S1, S2) verbunden ist, um das Schaltelement (S1, S2) mittels eines Steuersignals (SWI1, SWI2) zu steuern, wobei das Steuersignal (SWI1, SWI2) von einem Verzögerungswert (tp, tp1, tp2) abhängt, welcher zum Zeitintervall korrespondiert.

14. Kraftmessvorrichtung nach Anspruch 13, **dadurch gekennzeichnet, dass** die Steuervorrichtung und/oder Regelvorrichtung (CU) eine Recheneinheit aufweist, mit welcher der Verzögerungswert (tp, tp1, tp2) in Abhängigkeit der einwirkenden Kraft (L) berechenbar ist, und wobei die Recheneinheit mit dem Verzögerungselement (D, D1, D2) verbunden ist, um den berechneten Verzögerungswert (tp, tp1, tp2) an diese zu übertragen.

15. Kraftmessvorrichtung nach Anspruch 14, **dadurch gekennzeichnet, dass** die Kraftmessvorrichtung eine Messeinheit aufweist, welche mit der Recheneinheit verbunden ist, um ein von der einwirkenden Kraft (L) abhängiges Messsignal an die Recheneinheit zu übertragen, so dass dort der lastabhängige Verzögerungswert (tp, tp1, tp2) bestimmt werden kann.

**Claims**

1. Force-measuring device (1), specifically a balance, which is based on the principle of electromagnetic force-compensation, with an electric coil (53) which is arranged so as to be movable in a magnet system (50) and which has at least two windings (W1, W2), further with a current supply device (PB) which has at least two partial current sources (PB1, PB2), wherein each of said windings (W1, W2) has one of said partial current sources (PB1, PB2) assigned to it, further with a controlling device and/or regulating device (CU) which controls and/or regulates the supply of current of the windings by means of the partial current sources (PB1, PB2) in such a way that, dependent on the force (L) acting on the force-measuring device, currents (I1, I2) are sent through the windings (W1, W2), respectively, in such a way that the sum of the at least two electromagnetic forces which are thereby generated forms the compensation force and that at the same time the power dissipated by the coil always takes on a given predetermined value (Ptg).

**2.** Force-measuring device according to claim 1, **characterized in that** the given predetermined value (Ptg) is constant.

**3.** Force-measuring device according to claim 1 or 2, **characterized in that** the given predetermined value (Ptg) represents a minimum relative to different power values which are obtained for a load range within the measurement capability of the force-measuring device, in particular for the total range within which the force-measuring device is able to measure the applied force (L).

**4.** Force-measuring device according to one of the claims 1 to 3, **characterized in that** the force-measuring device comprises a current-measuring device (M) which measures the force-compensation current or -currents so that, dependent on the measured values, the currents (I1, I2) flowing through the windings (W1, W2) can be controlled and/or regulated.

**5.** Force-measuring device according to one of the claims 1 to 4, **characterized in that** the force-measuring device comprises a power estimator (PE) which serves to determine the momentary power (P0) of the coil which is required at any point in time for generating the compensation force and based on which the power is controlled and/or regulated to a given predetermined value (Ptg).

**6.** Force-measuring device according to claim 5, **characterized in that** the power estimator (PE) is configured to calculate the momentary power of the coil based on the sum of the currents I1 and I2, in particular by means of the equation

$$P0 = R * (I1 + I2)^2$$

wherein R represents the total resistance of the coil and I1, I2 represent the partial currents flowing, respectively, in the windings W1 and W2 which run parallel to each other.

**7.** Force-measuring device according to one of the claims 1 to 6, **characterized in that** the force-measuring device comprises a control quantity generator (XG) serving to calculate a control quantity (x) which is used for the control and/or regulation of the partial current sources (PB1, PB2) and which, being in particular a non-linear function F(P0), depends on an amount of power (P0) which is required at any point in time for generating the compensation force.

**8.** Force-measuring device according to claim 7, **characterized in that** the force-measuring device comprises a power distributor (PD), specifically a digital potentiometer, which serves to control and/or regulate the partial current sources (PB1, PB2) in accordance with the control quantity (x).

**9.** Force-measuring device according to claim 8, **characterized in that** the control quantity generator (XG) is configured in such a way that the control quantity (x) is calculated according to the equation:

$$x = a - b \cdot \sqrt{P^*} + c \cdot \sqrt{P^*-1}$$

wherein a, b and c represent given constants and P*, according to the equation

$$P^* = Ptot / P0$$

represents the normalized value of the momentary power P0 of the coil which is needed to generate the required compensation force at any point in time.

**10.** Force-measuring device according to one of the claims 1 to 9, **characterized in that** the partial current sources PB1 and PB2 are connected directly to the windings W1 and W2, respectively, to supply the latter with the currents I1 and I2.

**11.** Force-measuring device according to one of the claims 1 to 10, **characterized in that** the partial current source (PB1, PB2) is designed for the purpose of delivering to the at least one winding (W1, W2) a direct current in accordance with a predetermined given offset voltage (Uof1, Uof2).

**12.** Force-measuring device according to one of the claims 1 to 10, **characterized in that** the control- and/or regulation device (CU) comprises at least two switching elements (S1 and S2) serving to break up the partial currents (I1 and I2) into a substantially pulse-shaped form, wherein in the time profile of the partial currents (I1 and I2) a time interval can be prescribed during which the partial currents (I1 and I2) are flowing simultaneously.

**13.** Force-measuring device according to claim 12, **characterized in that** the control- and/or regulation device (CU) comprises at least one delay element (D, D1, D2) which is connected to at least one switching element (S1, S2) in order to control said switching element (S1, S2) by means of a control signal (SWI1, SWI2), wherein the control signal (SWI1, SWI2) depends on a delay value (tp, tp1, tp2) corresponding to said time interval.

**14.** Force-measuring device according to claim 13, **characterized in that** the control- and/or regulation device (CU) comprises an arithmetic unit operable to calculate the delay value (tp, tp1, tp2) dependent on the applied force (L), wherein the arithmetic unit is connected to the delay element (D, D1, D2) in order to transmit to the latter the calculated delay value (tp, tp1, tp2).

15. Force-measuring device according to claim 14, **characterized in that** the force-measuring device comprises a measuring unit which is connected to the arithmetic unit in order to transmit to the latter a measurement signal which depends on the applied force (L), so that the load-dependent delay value (tp, tp1, tp2) can be calculated in the arithmetic unit.

## Revendications

1. Dispositif de mesure de force (1), en particulier une balance, basé sur le principe de la compensation de force électromagnétique, avec une bobine électrique (53) disposée de façon mobile dans un système d'aimant (50) et présentant au moins deux enroulements (W1, W2), avec un dispositif d'alimentation en courant (PB) présentant au moins deux sources de courant partielles (PB1, PB2), une source de courant partielle (PB1, PB2) étant attribuée à chaque enroulement (W1, W2), avec un dispositif de commande et/ou un dispositif de réglage (CU) commandant et/ou réglant l'alimentation en courant des enroulements au moyen des sources de courant partielles (PB1, PB2) de telle façon qu'un courant (I1, I2) est guidé respectivement à travers les enroulements (W1, W2) en fonction de la force (L) agissant sur le dispositif de mesure de force, que les au moins deux forces électromagnétiques produites forment ensemble la force de compensation, et que la puissance délivrée par la bobine présente toujours une valeur prédéfinie (Ptg).

2. Dispositif de mesure de force selon la revendication 1, **caractérisé en ce que** la valeur prédéfinie (Ptg) est constante.

3. Dispositif de mesure de force selon la revendication 1 ou 2, **caractérisé en ce que** la valeur prédéfinie (Ptg) est minimale par rapport à différentes valeurs de puissance résultantes pour une plage, en particulier pour l'ensemble de la plage, de la force appliquée (L) déterminable par le dispositif de mesure de force.

4. Dispositif de mesure de force selon l'une des revendications 1 à 3, **caractérisé en ce que** le dispositif de mesure de force présente un dispositif de mesure de courant (M) mesurant le courant de compensation de force ou les courants de compensation de force, de sorte que les courants (I1, I2) traversant les enroulements (W1, W2) peuvent être commandés et/ou réglés en fonction des valeurs de mesure déterminées.

5. Dispositif de mesure de force selon l'une des revendications 1 à 4, **caractérisé en ce que** le dispositif de mesure de force comporte un moyen d'évaluation de la puissance (PE) servant à déterminer la puissance (P0) de la bobine momentanément nécessaire pour produire la force de compensation permettant de commander et/ou de régler la puissance selon la valeur prédéfinie (Ptg).

6. Dispositif de mesure de force selon la revendication 5, **caractérisé en ce que** le moyen d'évaluation de puissance (PE) est configuré pour calculer la puissance momentanée de la bobine à l'aide de la somme des courants I1 et I2, en particulier à l'aide de la formule

$$P0 = R * (I1 + I2)^2$$

où R représente la résistance totale de la bobine et I1 et I2 représentent les courants partiels des enroulements (W1, W2) montés en parallèle.

7. Dispositif de mesure de force selon l'une des revendications 1 à 6, **caractérisé en ce que** le dispositif de mesure de force comporte un générateur de grandeurs de commande (XG) permettant de calculer une grandeur de commande (x) servant à commander et/ou à régler les sources de courant partiel (PB1, PB2), et dépendant d'une puissance (P0) momentanément nécessaire pour produire la force de compensation, en tant que fonction F(P0), en particulier non linéaire.

8. Dispositif de mesure de force selon la revendication 7, **caractérisé en ce que** le dispositif de mesure de force comporte un distributeur de puissance (PD), en particulier un potentiomètre numérique, lequel sert à commander et/ou à régler les sources de courant partiel (PB1, PB2) conformément à la grandeur de commande (x).

9. Dispositif de mesure de force selon la revendication 8, **caractérisé en ce que** le générateur de grandeurs de commande (XG) est configuré de telle façon que la grandeur de commande (x) est calculée conformément à la formule suivante :

$$x = a - b \cdot \sqrt{P^*} + c \cdot \sqrt{P^* - 1}$$

où a, b et c représentent des constantes prédéfinies et P* représente la puissance momentanée P0 de la bobine, laquelle est normée par rapport à la puissance de charge totale Ptot conformément à

$$P^* = Ptot / P0$$

et laquelle est nécessaire pour produire la force de compensation momentanément requise.

10. Dispositif de mesure de force selon l'une des revendications 1 à 9, **caractérisé en ce que** chaque source de courant partiel (PB1, PB2) est reliée directement à un enroulement (W1, W2), pour alimenter celui-ci en courant (I1, I2).

11. Dispositif de mesure de force selon l'une des revendications 1 à 10, **caractérisé en ce que** la source de courant partiel (PB1, PB2) est conçue pour alimenter l'au moins un enroulement (W1, W2) en courant continu conformément à une tension de décalage prédéfinie (Uof1, Uof2).

12. Dispositif de mesure de force selon l'une des revendications 1 à 10, **caractérisé en ce que** le dispositif de commande et/ou le dispositif de réglage (CU) comporte au moins deux éléments de commutation (S1 et S2) permettant de commuter les courants partiels (I1 et I2) en tant que courant essentiellement pulsé, un intervalle de temps pouvant être prédéfini dans l'évolution temporelle des courants partiels (I1 et I2), au cours duquel les courants partiels (I1 et I2) circulent simultanément.

13. Dispositif de mesure de force selon la revendication 12, **caractérisé en ce que** le dispositif de commande et/ou le dispositif de réglage (CU) comportent/comporte au moins un élément de retard, lequel est relié à au moins un élément de commutation (S1, S2) pour commander l'élément de commutation (S1, S2) à l'aide d'un signal de commande (SWI1, SWI2), le signal de commande (SWI1, SWI2) dépendant d'une valeur de retard (tp, tp1, tp2) correspondant à l'intervalle de temps.

14. Dispositif de mesure de force selon la revendication 13, **caractérisé en ce que** le dispositif de commande et/ou le dispositif de réglage (CU) comportent/comporte une unité de calcul permettant de calculer la valeur de retard (tp, tp1, tp2) en fonction de la force appliquée (L), et l'unité de calcul étant reliée à l'élément de retard (D, D1, D2) afin de lui transmettre la valeur de retard calculée (tp, tp1, tp2).

15. Dispositif de mesure de force selon la revendication 14, **caractérisé en ce que** le dispositif de mesure de force comporte une unité de mesure reliée à l'unité de calcul pour transmettre un signal de mesure dépendant de la force appliquée (L) à l'unité de calcul, afin de pouvoir y déterminer la valeur de départ (tp, tp1, tp2) dépendante de la charge.

**FIG. 1**

**FIG. 2**

**FIG. 3**

**FIG. 4a**

**FIG. 4b**

**FIG. 4c**

**FIG. 4d**

**FIG. 5**

**FIG. 6**

**FIG. 7**

**FIG. 8**

**FIG. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2819451
- US 4372406 A

- DE 3136171
- CH 634654